# FASCICULE DE BREVET EUROPEEN

(11) **EP 4 538 057 B1**
(45) Date de publication et mention de la délivrance du brevet: **25.02.2026**
(21) Numéro de dépôt: 23203181.5
(22) Date de dépôt: 12.10.2023
(51) Int. Cl.: B60C 7/06, B60C 7/14, B60C 7/16, B60C 7/20

(54) **ROUE DÉFORMABLE À SUPPORT DE CHARGE NON-PNEUMATIQUE ET À BANDE DE FLEXION MÉTALLIQUE POUR DES CONDITIONS LUNAIRES ET MARTIENNES**
VERFORMBARES RAD MIT NICHT-PNEUMATISCHEM LAUFRAD UND METALLISCHEM BIEGEBAND FÜR BEDINGUNGEN AUF DEM MOND UND DEM MARS
DEFORMABLE WHEEL WITH NON-PNEUMATIC LOAD-BEARING AND METALLIC BENDING BAND FOR LUNAR AND MARTIAN CONDITIONS

(43) Date de publication de la demande: 16.04.2025
(73) Titulaire: Venturi Lab SA, 1720 Corminboeuf (CH)
(72) Inventeur: OLSOMMER, David, 1616 ATTALENS (CH); BAUMGARTNER, Gérard, 1684 Mézières (CH); DELFINO, Antonio, 1772 GROLLEY (CH)
(74) Mandataire: Cabinet Beau de Loménie

(56) Documents cités:
- CN-A- 102 133 840
- CN-A- 107 856 478
- DE-C- 415 354
- US-A- 1 171 507

## Description

### Arrière-plan de l'invention

La présente invention concerne une roue déformable à support de charge non-pneumatique. Plus particulièrement, l'invention concerne une roue qui supporte une charge avec ses composants structurels et qui a des capacités de performance adaptées à équiper un véhicule destiné à rouler dans des conditions extrêmes comme celles rencontrées sur la Lune et sur Mars.

La roue pneumatique possède des capacités de support de charge, d'absorption des chocs de la route et de transmission de force (accélérations, arrêts et changements de direction) qui sont particulièrement bien adaptées à de nombreux véhicules, notamment les bicyclettes, les motocyclettes, les automobiles et les camions. Les capacités d'absorption des chocs des pneumatiques sont également utiles dans d'autres applications, par exemple pour les chariots transportant des équipements médicaux ou du matériel électronique sensible.

Des alternatives à la roue pneumatique existent. On pourra par exemple citer les pneus pleins et les pneus à ressorts. Toutefois, ces alternatives ne présentent pas les avantages de performance des roues pneumatiques. En particulier, les pneus pleins reposent sur la compression de la partie en contact avec le sol pour supporter la charge. Ce type de pneus peut être lourd et rigide et n'a pas la capacité d'absorption des chocs des roues pneumatiques. Lorsqu'elles sont rendues plus élastiques, les roues non pneumatiques conventionnelles n'ont pas le support de charge ou l'endurance des roues pneumatiques.

Pour remédier à ces inconvénients, la publication US 7,418,988 propose un pneu à support structurel qui comprend une bande annulaire extérieure et une pluralité de rayons s'étendant transversalement et radialement vers l'intérieur depuis la bande annulaire jusqu'au moyeu de la roue et destinés à transmettre en tension les forces de charge entre la bande annulaire et le moyeu.

La roue structurellement supportée selon cette invention ne comporte pas de cavité destinée à contenir de l'air sous pression et n'a donc pas besoin de disposer d'un joint avec la jante de la roue pour conserver la pression d'air interne. Cette roue à support structurel ne nécessite donc pas de pneu au sens où on l'entend.

Les rayons de cette roue agissent en tension pour transmettre les forces de charge entre la roue et la bande annulaire, ce qui permet notamment de supporter la masse d'un véhicule. Les forces de support sont générées par la tension des rayons qui ne sont pas reliés à la partie de la bande annulaire en contact avec le sol. Les rayons transmettent également les forces requises pour l'accélération, l'arrêt et les virages.

Quelles que soient les alternatives connues de l'art antérieur pour la réalisation de roues non pneumatiques, celles-ci ne donnent généralement pas entière satisfaction, notamment lorsqu'elles sont destinées à rouler dans des conditions extrêmes comme celles rencontrées sur la Lune et sur Mars. En effet, avec de telles conditions, il est nécessaire que la roue puisse se déformer fortement au passage d'un obstacle tout en générant une pression de contact qui soit faible et uniforme pour permettre au véhicule de rester mobile sur un sol meuble tel que le sol que l'on rencontre sur la Lune et sur Mars.

On connaît de la demande de brevet EP22192685 déposée le 29 août 2022 par la Demanderesse une roue permettant de répondre à ces besoins du fait notamment de la présence d'une bande annulaire lamifiée qui comprend une pluralité de viroles concentriques qui sont assemblées avec interposition de couches d'interposition composées chacune d'un matériau dont le module de Young est de 600000 à 1000 fois inférieur à celui des viroles, par exemple en matériau élastomère. Sous une charge appliquée de l'extérieur, la partie de la bande lamifiée en contact avec le sol se déforme, non pas sous une forme essentiellement circulaire, mais sous une forme épousant la surface du sol tout en maintenant une longueur essentiellement constante des viroles. La roue selon cette demande de brevet permet ainsi de générer une pression de contact qui soit faible et uniforme au sol. De la sorte, le véhicule équipé de telles roues peut rester mobile (c'est-à-dire qu'il ne s'ensable pas) même sur un sol meuble (de type sable) tel que rencontré sur la Lune et sur Mars.

La structure à base d'élastomère des couches d'interposition de la bande lamifiée d'une telle roue possède une température de fonctionnement minimum comprise entre -140°C et -150°C, ce qui permet à la roue de fonctionner, d'une part dans la plupart des missions autour du pôle sud lunaire et d'autre part de fonctionner sous toutes les latitudes sur Mars (où la température minimum absolue est de -120°C). Cependant, une telle limite peut poser des problèmes si le véhicule équipé de telles roues doit se rendre dans des régions ombrées en permanence (ou « Permanently Shadowed Regions » ou PSR) comme le sont les pôles lunaires pour lesquelles les températures sont en permanence de l'ordre de -220°C à - 240°C. Le document CN 107 856 478 décrit une structure de bande de roulement qui comprend un assemblage de ressorts enchâssé dans un anneau en caoutchouc.

### Objet et résumé de l'invention

La présente invention a donc pour but principal de pallier de tels inconvénients en proposant une structure de roue déformable à support de charge non-pneumatique qui puisse équiper des véhicules destinés à rouler dans des régions de la Lune ombrées en permanence où les températures sont en permanence de l'ordre de -220°C à -240°C.

Conformément à l'invention, ce but est atteint grâce à une roue déformable à support de charge non-pneumatique selon la revendication 1.

La roue selon l'invention est remarquable du fait que la bande de roulement est une bande de flexion entièrement métallique et qui peut rester flexible aux températures pouvant atteindre -250°C que l'on rencontre typiquement dans des régions de la Lune qui sont en permanence à l'ombre. En particulier, cette tenue en flexion de la bande de roulement est obtenue sans nécessiter de recourir au chauffage de la bande de roulement.

De préférence, les ondulations de l'âme de la bande de roulement ont une section droite de forme triangulaire.

De préférence également, les ressorts de la bande de roulement sont positionnés selon plusieurs rangées annulaires.

Les renforts radiaux reliant la bande de roulement au moyeu peuvent avantageusement comprendre des ressorts. Alternativement, les renforts radiaux peuvent comprendre des câbles métalliques.

Quant à la virole de la bande de roulement, elle peut être réalisée en métal ou en matériau composite.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique et de face d'une roue selon un mode de réalisation de l'invention ;
- la figure 2 est une vue en perspective et en coupe transversale de la roue de la figure 1 ;
- la figure 3 est une vue en perspective de la bande de flexion de la roue de la figure 1 ; et
- la figure 4 est une loupe de la figure 3 montrant l'assemblage d'un ressort de la bande de flexion.

### Description détaillée de modes de réalisation

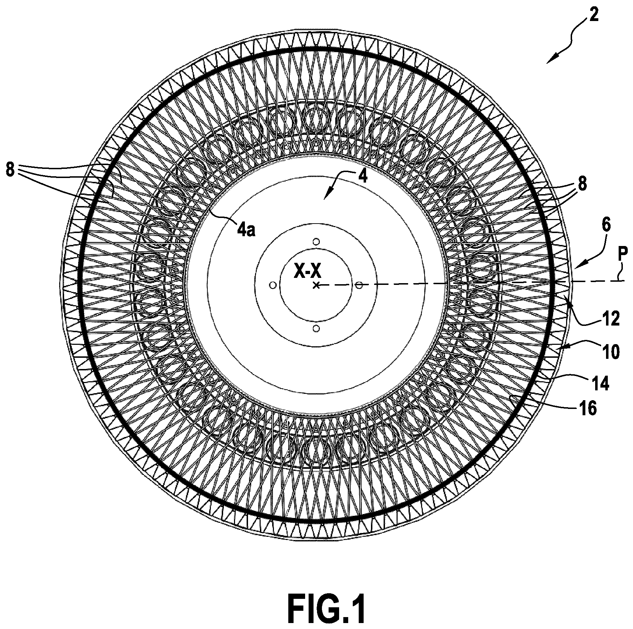

L'invention concerne une roue déformable à support de charge non-pneumatique telle que représentée sur la figure 1 qui est adaptée à équiper un véhicule destiné à rouler dans des conditions extrêmes comme celles rencontrées sur la Lune et sur Mars.

La roue 2 représentée sur la figure 1 comprend principalement un moyeu 4, une bande annulaire de roulement 6 ayant une surface extérieure qui est destinée à être en contact avec le sol en étant apte à se déformer sous une charge appliquée de l'extérieur pour épouser la surface du sol, et une pluralité de renforts radiaux (ici des câbles métalliques 8) reliant radialement le moyeu à la bande de roulement.

Selon l'invention, la bande de roulement 6 est une bande de flexion qui comprend une âme 10 métallique munie d'une pluralité d'ondulations 12 prises en sandwich entre une virole 14 et une pluralité de ressorts 16 circonférentiels permettant à la bande de roulement de pouvoir se déformer en flexion.

Plus précisément, comme représenté sur 2 et 3, les ondulations 12 de l'âme 10 de la bande de roulement sont formées à partir de tôles métalliques qui sont pliées en V dans le sens longitudinal (c'est-à-dire parallèlement à l'axe longitudinal de rotation X-X de la roue 2).

Ainsi, les ondulations 12 de l'âme 10 de la bande de roulement présentent chacune une section droite (c'est-à-dire selon un plan de coupe transversal à la roue) de forme triangulaire.

On notera que la pointe en V des tôles métalliques qui forment les ondulations 12 est tournée vers l'intérieur de la roue (c'est-à-dire vers l'axe de rotation X-X de celle-ci) et s'évasent vers l'extérieur de la roue.

On notera également que chaque ondulation 12 de l'âme de la bande de roulement est symétrique par rapport à un plan P radial à la roue (et passant par la pointe en V de l'ondulation).

On notera encore que les tôles métalliques qui composent les ondulations présentent avantageusement des trous 18 qui sont répartis sur toute leur longueur afin d'alléger le poids de la roue.

Par ailleurs, les ondulations 12 de l'âme de la bande de roulement peuvent être réalisées par exemple en acier inoxydable ou en titane.

La virole 14 de la bande de roulement 6 de la roue selon l'invention est réalisée en métal (par exemple en acier inoxydable ressort ou en titane de type TA6V)) ou en matériau composite (par exemple à fibres de verre ou à fibres de carbone).

Lorsque la virole 14 de la bande de roulement est réalisée en métal, les ondulations 12 de l'âme peuvent être soudées, brasées ou rivetées sur celle-ci.

Ainsi, dans le cas d'une virole 14 réalisée en matériaux composites, la fixation des ondulations 12 est réalisée de manière préférentielle à l'aide de rivets métalliques. Dans ce cas, les ondulations 12 peuvent comprendre un certain nombre de saignées sur le haut et sur le bas, non représentées sur les figures, de manière à donner de la souplesse suivant la direction de l'axe de rotation de la roue, afin de permettre des dilatations différentielles entre la virole 14 et les ondulations 12 sans introduire de fortes contraintes qui pourraient nuire à l'intégrité de la structure.

Enfin, la bande de roulement 6 de la roue selon l'invention comprend une pluralité de ressorts 16 circonférentiels permettant à la bande de roulement de pouvoir se déformer en flexion.

De préférence, les ressorts 16 de la bande de roulement sont positionnés selon plusieurs rangées parallèles qui s'étendent selon une direction circonférentielle à la roue.

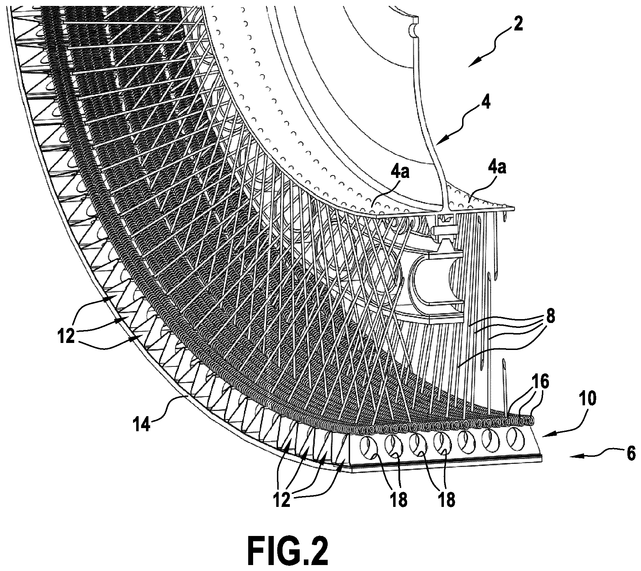

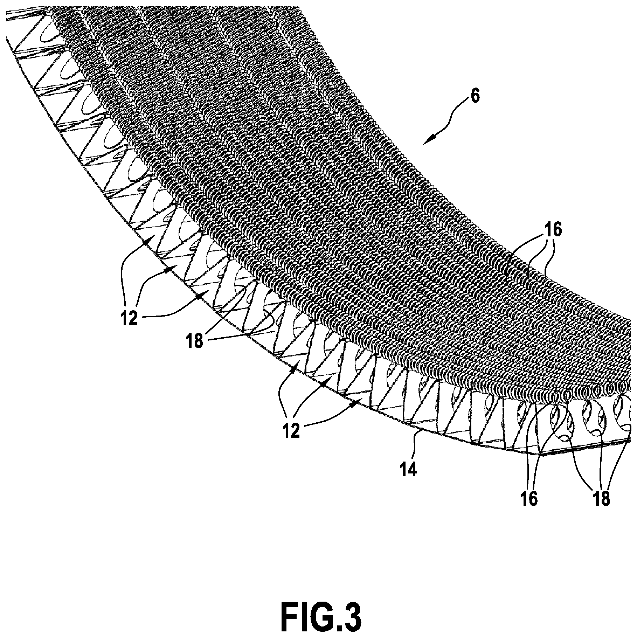

Ainsi, sur le mode de réalisation représenté sur les figures 2 et 3, les ressorts 16 sont répartis selon dix-sept rangées parallèles les unes aux autres.

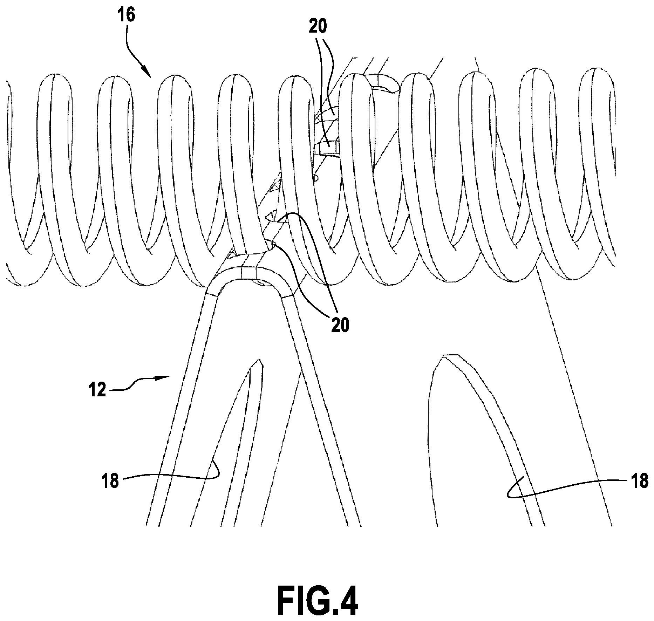

La figure 4 illustre un exemple d'assemblage d'un ressort 16 sur une ondulation 12 de l'âme de la bande de roulement. Dans cet exemple, la pointe en V de l'ondulation 12 comprend une pluralité de perforations 20 qui sont traversées par les ressorts 16 de façon à permettre une fixation des ressorts sur les ondulations.

Comme indiqué précédemment, dans le mode de réalisation des figures 1 à 4, les renforts radiaux reliant radialement le moyeu 4 de la roue à la bande de roulement 6 sont composés par des câbles métalliques 8.

Plus précisément, dans ce mode de réalisation, les câbles 8 peuvent être fixés, à une extrémité intérieure, sur l'un des deux bords latéraux 4a du moyeu 4, et à une extrémité extérieure opposée, directement sur la virole 14 de la bande de roulement.

Par ailleurs, à titre d'exemple, chaque câble 8 peut être composé par un assemblage de fils métalliques (par exemple en acier) constitués en torons, eux-mêmes rassemblés autour d'une âme métallique. De préférence, les câbles 8 présentent une asymétrie de raideur avec une raideur mécanique en traction Kt qui est fortement supérieure à leur raideur mécanique en compression Kc.

De même, le nombre, la répartition et l'inclinaison des câbles 8 peuvent varier. On pourra se référer à la demande de brevet EP22192685 déposée le 29 août 2022 par la Demanderesse qui décrit une architecture particulière de câbles.

On notera que l'extrémité intérieure respective des câbles 8 est avantageusement fixée sur le moyeu 4 par l'intermédiaire de ressorts à lame ou de lames pliées en U (non représentés sur les figures) permettant de moduler la raideur radiale des câbles.

On notera également qu'à la place de câbles métalliques, les renforts radiaux reliant radialement le moyeu 4 de la roue à la bande de roulement 6 peuvent être composés de ressorts (ce mode de réalisation n'est pas représenté sur les figures).

Grâce à une telle composition de la roue, la partie de la bande de roulement qui est en contact avec le sol se déforme sous une charge appliquée de l'extérieur mais sous une forme épousant la surface du sol.

## Revendications

1. Roue (2) déformable à support de charge non-pneumatique destinée à équiper un véhicule pour rouler en conditions extrêmes comme celles rencontrées sur la lune et sur Mars, comprenant :
un moyeu (4),
une bande annulaire de roulement (6) positionnée autour du moyeu et ayant une surface extérieure qui est destinée à être en contact avec le sol en étant apte à se déformer sous une charge appliquée de l'extérieur pour épouser la surface du sol, et
une pluralité de renforts radiaux (8) reliant la bande de roulement au moyeu,
la bande de roulement étant une bande de flexion comprenant une âme (10) métallique munie d'une pluralité d'ondulations (12) prises en sandwich entre une virole (14) et une pluralité de ressorts (16) circonférentiels permettant à la bande de roulement de pouvoir se déformer en flexion,
**caractérisée en ce que** les ondulations (12) de l'âme de la bande de roulement sont formées à partir de tôles métalliques pliées en V.

2. Roue selon la revendication 1, dans laquelle les ondulations (12) de l'âme de la bande de roulement ont une section droite de forme triangulaire.

3. Roue selon l'une des revendications 1 et 2, dans laquelle les ressorts (16) de la bande de roulement sont positionnés selon plusieurs rangées annulaires.

4. Roue selon l'une quelconque des revendications 1 à 3, dans laquelle les renforts radiaux reliant la bande de roulement au moyeu comprennent des ressorts.

5. Roue selon l'une quelconque des revendications 1 à 3, dans laquelle les renforts radiaux reliant la bande de roulement au moyeu comprennent des câbles métalliques (8).

6. Roue selon l'une quelconque des revendications 1 à 5, dans laquelle la virole (14) est réalisée en métal ou en matériau composite.

## Patentansprüche

1. Verformbares Rad (2) mit nicht-pneumatischem Laufrad, das ausgelegt ist, um ein Fahrzeug auszustatten, um unter extremen Bedingungen wie denjenigen, die auf dem Mond oder dem Mars vorgefunden werden, zu fahren, umfassend:
eine Nabe (4),
eine ringförmige Lauffläche (6), die um die Nabe positioniert ist und eine Außenfläche aufweist, die ausgelegt ist, um mit dem Boden in Kontakt zu sein, und geeignet, um sich unter einer Last zu verformen, die auf das Äußere angewendet wird, um sich an die Oberfläche des Bodens anzupassen, und
eine Vielzahl von radialen Verstärkungen (8), die die Lauffläche mit der Nabe verbinden,
wobei die Lauffläche ein Biegeband ist, umfassend einen metallischen Kern (10), ausgestattet mit einer Vielzahl von Wellen (12), die zwischen einem Mantel (14) und einer Vielzahl von Umfangsfedern (16) sandwichartig angeordnet sind, wodurch ermöglicht wird, dass sich die Lauffläche elastisch verformen kann,
**dadurch gekennzeichnet, dass** die Wellen (12) des Kerns der Lauffläche aus V-förmig gefalteten Metallblechen gebildet sind.

2. Rad nach Anspruch 1, wobei die Wellen (12) des Kerns der Lauffläche einen dreieckig geformten geraden Abschnitt aufweisen.

3. Rad nach einem der Ansprüche 1 und 2, wobei die Federn (16) der Lauffläche in mehreren ringförmigen Reihen positioniert sind.

4. Rad nach einem der Ansprüche 1 bis 3, wobei die radialen Verstärkungen, die die Lauffläche mit der Nabe verbinden, Federn umfassen.

5. Rad nach einem der Ansprüche 1 bis 3, wobei die radialen Verstärkungen, die die Lauffläche mit der Nabe verbinden, metallische Kabel (8) umfassen.

6. Rad nach einem der Ansprüche 1 bis 5, wobei der Mantel (14) aus Metall oder aus Verbundwerkstoff hergestellt ist .

## Claims

1. A deformable wheel (2) with non-pneumatic load-bearing support intended to equip a vehicle for traveling in extreme conditions such as those encountered on the moon and Mars, comprising:
a hub (4),
an annular tread band (6) positioned around the hub and having an outer surface that is intended to be in contact with the ground being able to deform under
an applied load from the outside in order to mold to the surface of the ground, and
a plurality of radial reinforcements (8) connecting the tread band to the hub,
the tread band being a flexion band comprising a metallic core (10) with a plurality of corrugations (12) sandwiched between an annular band (14) and a plurality of circumferential springs (16) allowing the tread band to deform in flexion,
**characterized in that** the corrugations (12) of the core of the tread band are formed from V-folded metal sheets.

2. The wheel according to claim 1, wherein the corrugations (12) of the core of the tread band have a triangular cross-section shape.

3. The wheel according to one of claims 1 and 2, wherein the springs (16) of the tread band are positioned according to several annular rows.

4. The wheel according to any one of claims 1 to 3, wherein the radial reinforcements connecting the tread band to the hub comprise springs.

5. The wheel according to any one of claims 1 to 3, wherein the radial reinforcements connecting the tread band to the hub comprise metallic cables (8).

6. The wheel according to any one of claims 1 to 5, wherein the annular band (14) is realized of metal or composite material.
